# EUROPEAN PATENT APPLICATION

(11) **EP 4 817 813 A1**
(43) Date of publication of application: **07.10.2026**
(21) Application number: 26167249.7
(22) Date of filing: 24.03.2026
(51) Int. Cl.: B25J 11/00, B25J 13/08, B25J 15/00, B25J 15/02

(54) **APPARATUSES, SYSTEMS, AND METHODS FOR PROCESSING A WORKPIECE**

(30) Priority: 02.04.2025 US 202519098062
(71) Applicant: The Boeing Company, Arlington, VA 22202 (US)
(72) Inventor: CARDON, Lisa A., Arlington, 22202 (US); THOMER, Reilly J., Arlington, 22202 (US); WOEHRLIN, Keith C., Arlington, 22202 (US); CANTRELL, Andrew M., Arlington, 22202 (US); LOCKE, Alan S., Arlington, 22202 (US)
(74) Representative: Sandri, Sandro

(57) **Abstract**

An apparatus for drilling a workpiece includes a robotic manipulator and an end effector. The end effector is coupled to the robotic manipulator. The end effector includes a base. The end effector includes a nose that is coupled to the base. The end effector includes a drill that is movable relative to the nose along a processing axis. The end effector includes a foot that is coupled to the base. One of the nose or the foot is movable relative to the base along the processing axis and another one of the nose or the foot is fixed relative to the base. The robotic manipulator positions one of the nose or the foot in contact with the workpiece. The end effector clamps the workpiece between the nose and the foot.

## Description

### FIELD

The present disclosure relates generally to material processing and, more particularly, to apparatuses, systems, and methods for processing materials and, more particularly, to automated clamp up drilling using a compact clamp and drill positioned by a robotic manipulator.

### BACKGROUND

Automated machining often utilizes an end effector at the end of a robotic arm, designed to interact with the environment and/or a workpiece. The robotic arm manipulates the end effector, and the end effector manipulates the workpiece and/or positions a machining tool relative to the workpiece. The configuration of the robot and end effector depends on the automated process to be performed. However, automated machining of certain types of workpieces can be challenging. As an example, workpieces formed of relatively thin material can bow, collapse, or otherwise deform during processing. As another example, access to a processing location, particularly one located in a confined area or near an obstruction, can be difficult or impossible.

Additionally, automated machining typically utilizes large end effectors that include large and heavy counterbalance mechanisms and clamps to manipulate the workpiece. Similarly, large robots are needed to manipulate the end effector. Such large and complex machines require significant space and capital investments, which are not feasible for low production rate components. Attempts at using smaller robotic systems have been unsuccessful due to material deformation caused by clamping and inaccurate positioning of the machining tool. As such, certain operations may require manual processing, for example, utilizing hand tools. Accordingly, those skilled in the art continue with research and development efforts in the field of automated material processing and, more particularly, automated machining of thin materials.

### SUMMARY

Disclosed are examples of apparatus for drilling a workpiece, a system for processing a workpiece, a method for drilling a workpiece, and a method for processing a workpiece. The following is a non-exhaustive list of examples, which may or may not be claimed, of the subject matter according to the present disclosure.

In an example, the disclosed apparatus includes a robotic manipulator and an end effector. The end effector is coupled to the robotic manipulator. The end effector includes a base. The end effector includes a nose that is coupled to the base. The end effector includes a drill that is movable relative to the nose along a processing axis. The end effector includes a foot that is coupled to the base. One of the nose or the foot is movable relative to the base along the processing axis and another one of the nose or the foot is fixed relative to the base. The robotic manipulator positions one of the nose or the foot in contact with a workpiece. The end effector clamps the workpiece between the nose and the foot.

In an example, the disclosed system includes a robotic manipulator and an end effector. The end effector is coupled to the robotic manipulator. The end effector includes a base. The end effector includes a nose that is coupled to the base. The end effector includes a tool that is coupled to the base. The tool is movable relative to the nose along a processing axis. The end effector includes a foot that is coupled to the base. The system includes a jig. The jig is configured to secure a workpiece. One of the nose or the foot is movable relative to the base along the processing axis and another one of the nose or the foot is fixed relative to the base. The robotic manipulator positions one of the nose or the foot in contact with the workpiece. The end effector clamps the workpiece between the nose and the foot.

In an example, the disclosed drilling method includes steps of: (1) positioning one of a nose or a foot of an end effector in contact with a workpiece using a robotic manipulator; (2) moving another one of the nose or the foot to contact the workpiece opposite the one of the nose or the foot to clamp the workpiece between the nose and the foot; and (3) advancing a drill bit of a drill of the end effector through the workpiece.

In an example, the disclosed processing method includes steps of: (1) positioning one or a nose or a foot of an end effector in contact with a workpiece using a robotic manipulator; (2) moving another one of the nose or the foot of the end effector to contact the workpiece opposite the one of the nose or the foot to clamp the workpiece between the nose and the foot; and (3) moving a tool bit of a tool of the end effector relative to the workpiece.

Other examples of the apparatus, the system, and the methods will become apparent from the following detailed description, the accompanying drawings, and the appended claims.

Generally, the present disclosure relates to an apparatus for drilling a workpiece, the apparatus comprising a robotic manipulator and an end effector coupled to the robotic manipulator, the end effector comprising a base, a nose coupled to the base, a drill coupled to the base and movable relative to the nose along a processing axis, and a foot coupled to the base. One of the nose or the foot is movable relative to the base along the processing axis and another one of the nose or the foot is fixed relative to the base. The robotic manipulator positions one of the nose or the foot in contact with the workpiece, and the end effector clamps the workpiece between the nose and the foot.

According to a preferred embodiment, the robotic manipulator comprises a force torque sensor configured to detect contact forces and torque between the foot and the workpiece, and a force torque controller configured to adjust the robotic manipulator to control a contact force applied by the one of the nose or the foot based on feedback from the force torque sensor.
According to a further preferred embodiment, the robotic manipulator comprises a collaborative robot having multiple degrees of freedom to enable repositioning of the end effector for drilling at different angles and orientations relative to the workpiece.

According to another preferred embodiment, the drill is coupled to the nose such that the drill moves along the processing axis with the nose.

In accordance with another embodiment, the foot comprises an extension coupled to the base, and a die extending from the extension along the processing axis. In this case the die is configured to contact the workpiece opposite the nose. Furthermore, according to a preferred embodiment, the die may be hollow to receive a drill bit.

In accordance with a further preferred embodiment, the nose comprises a nose bracket coupled to the base, and a nose piece extending from the nose bracket along the processing axis and comprising a nose contact surface configured to contact the workpiece opposite the foot. In this case, according to a preferred embodiment, the nose piece is contoured to accommodate a portion of the workpiece such that the nose contact surface contacts the workpiece.

In accordance with a preferred embodiment, the apparatus further comprises a nose drive configured to linearly move the nose along the processing axis, or a foot drive configured to linearly move the foot along the processing axis.

According to another preferred embodiment, the apparatus further comprises a tool drive configured to linearly move the drill along the processing axis.

In accordance with a further preferred embodiment, the apparatus comprises a controller configured to position one of the nose or the foot along the processing axis, and advance the drill along the processing axis.

Additionally or alternatively, the apparatus may comprise a lubricant source, wherein the end effector further comprises a lubricant port in fluid communication with the lubricant source.

Additionally or alternatively, the apparatus may comprise a vacuum source, wherein the end effector further comprises a vacuum port in fluid communication with the vacuum source.

The present disclosure further relates to a system for processing a workpiece, the system comprising a robotic manipulator and an end effector coupled to the robotic manipulator, the endo effector comprising a base, a nose coupled to the base, a tool movable relative to the nose along a processing axis and a foot coupled to the base. The system further comprises a jig configured to secure the workpiece. One of the nose or the foot is movable relative to the base along the processing axis and another one of the nose or the foot is fixed relative to the base. Furthermore, the robotic manipulator positions one of the nose or the foot in contact with the workpiece, and the end effector clamps the workpiece between the nose and the foot.

According to a preferred embodiment of the system, the robotic manipulator comprises a collaborative robot having multiple degrees of freedom to enable repositioning of the end effector for processing at different angles and orientations relative to the workpiece, a force torque sensor configured to detect contact forces and torque between the one of the nose or the foot and the workpiece, and a force torque controller configured to adjust the collaborative robot to control a contact force applied by the one of the nose or the foot based on feedback from the force torque sensor.

According to a preferred embodiment of the system, the foot comprises an extension coupled to the base and extending at least approximately perpendicular to the processing axis, and a die extending from the extension along the processing axis and configured to contact the workpiece. Furthermore, the nose comprises a nose bracket coupled to the base and extending at least approximately perpendicular to the processing axis, and a nose piece extending from the nose bracket along the processing axis and comprising a nose contact surface configured to contact the workpiece opposite the die. Furthermore, the tool comprises a tool motor, a tool holder coupled to the tool motor and configured to hold a tool bit, and a tool drive configured to linearly move the tool motor along the processing axis to advance the tool bit through the workpiece.

According to a preferred embodiment, the system comprises one of a nose drive configured to linearly move the nose along the processing axis, or a foot drive configured to linearly move the foot along the processing axis, and a controller configured to position the one of the nose or the foot along the processing axis and advance the tool along the processing axis.

The present disclosure further relates to a method for drilling a workpiece, the method comprising positioning one of a nose or a foot of an end effector in contact with the workpiece using a robotic manipulator, moving another one of the nose or the foot to contact the workpiece opposite the one of the nose or the foot to clamp the workpiece between the nose and the foot, and advancing a drill bit of a drill of the end effector through the workpiece.

According to a preferred way of carrying out the method, the method further includes monitoring a force applied to the workpiece using a force torque sensor, and adjusting the force applied to the workpiece by the foot based on a monitored force signal provided by the force torque sensor.

According to a preferred way of carrying out the method, the method further includes accommodating a portion of the workpiece with a nose piece of the nose such that a nose contact surface of the nose piece contacts the workpiece opposite the foot.

### BRIEF DESCRIPTION OF THE DRAWINGS

Fig. 1 is a schematic block diagram of an example of a system for processing a workpiece;
Fig. 2 is a flow diagram of an example of a method for processing a workpiece;
Fig. 3 is a front elevation view of an example of an apparatus for processing a workpiece;
Fig. 4 is a side elevation view of an example of the apparatus for processing a workpiece;
Fig. 5 is an exploded, perspective view of an example of the apparatus for processing a workpiece;
Fig. 6 is a side elevation view of an example of the apparatus during an initial positioning stage of processing a workpiece in a first orientation;
Fig. 7 is a side elevation view of an example of a portion of the apparatus during a contacting stage of processing a workpiece in the first orientation;
Fig. 8 is a side elevation view of an example of a portion of the apparatus during a clamping stage of processing a workpiece in the first orientation;
Fig. 9 is a side elevation view of an example of a portion of the apparatus during a drilling stage of processing a workpiece in the first orientation;
Fig. 10 is a side elevation view of an example of the apparatus during an initial positioning stage of processing a workpiece in a second orientation;
Fig. 11 is a perspective view of an example of the apparatus for processing a workpiece;
Fig. 12 is an exploded, perspective view of an example of the apparatus for processing a workpiece;
Fig. 13 is a side elevation view of an example of a nose and a foot of the apparatus depicted clamping a workpiece in the first orientation;
Fig. 14 is a side elevation view of an example of the nose and the foot of the apparatus depicted clamping a workpiece in a third orientation;
Fig. 15 is a side elevation view of an example of the nose and the foot of the apparatus depicted clamping a workpiece in the second orientation;
Fig. 16 is a side elevation view of an example of the nose and the foot of the apparatus depicted clamping a workpiece in the first orientation;
Fig. 17 is a side elevation view of an example of the nose and the foot of the apparatus depicted clamping a workpiece in the first orientation;
Fig. 18 is a side elevation view of an example of the nose and the foot of the apparatus depicted clamping a workpiece in the second orientation;
Fig. 19 is a side elevation view of an example of the nose and the foot of the apparatus depicted clamping a workpiece in the first orientation;
Fig. 20 is a side elevation view of an example of the nose and the foot of the apparatus depicted clamping a workpiece in the second orientation;
Fig. 21 is an illustration of an example of the system for processing a workpiece;
Fig. 22 is a schematic illustration of an example of an aircraft; and
Fig. 23 is a flow diagram of an example of an aircraft manufacturing and service method.

### DETAILED DESCRIPTION

The following detailed description describes apparatuses, systems, and methods for processing relatively thin workpieces. Examples use an end effector and a robot without the need for large and heavy counterbalancing and clamping mechanisms. Examples of the apparatuses, systems, and methods utilize force controls and high accuracy compact robots and end effectors to provide a lightweight clamping and machining solution. Force control is used to initiate and detect contact with the workpiece and stop at the appropriate position (in lieu of a counter balancing mechanism). A lightweight nose and foot clamps the workpiece to avoid movement of the workpiece (in lieu of a large clamping mechanism).

The present disclosure recognizes that automated robotic machining typically utilizes large robots and end effectors that include large and heavy counterbalance mechanisms and clamps. The counterbalance mechanisms are required to position the clamp and/or machining tool without damaging the workpiece. The large clamps are required to counteract relative movement across the workpiece. Large clamps and correspondingly large clamp forces are also required to counteract drill thrust, which, when unchecked, can cause the clamp to lift off the part, prevent the drill from advancing through the material, and/or allow the tool bit to dance or skid across the part. The apparatuses, systems, and methods disclosed herein provide advantageous alternatives to the use of large, complex, and expensive robotic machining systems.

The present disclosure also recognizes that large robots and end effectors often struggle with machining relatively thin workpieces or operating in confined spaces due to a combination of physical, mechanical, and control-related factors. Thin parts or confined processing locations often lack the clearance needed for large robots and end effectors. The control systems and sensors of large robots may not be suitable for the small-scale adjustments, which can lead to inaccuracies. In confined spaces or near obstacles, the robot's range of motion can prevent it from positioning the end effector at the angle or location needed for processing. Thin parts are sensitive to excessive force, vibration, or pressure, which can lead to deformation or damage. Large robots are typically built for high-torque applications and can struggle to scale down the force output effectively. Even with advanced force feedback systems, the inertia of a large robot and end effector can make it hard to achieve the gentle touch needed for thin materials. The apparatuses, systems, and methods disclosed herein provide advantageous solutions to the problems commonly associated with large robotic machining systems.

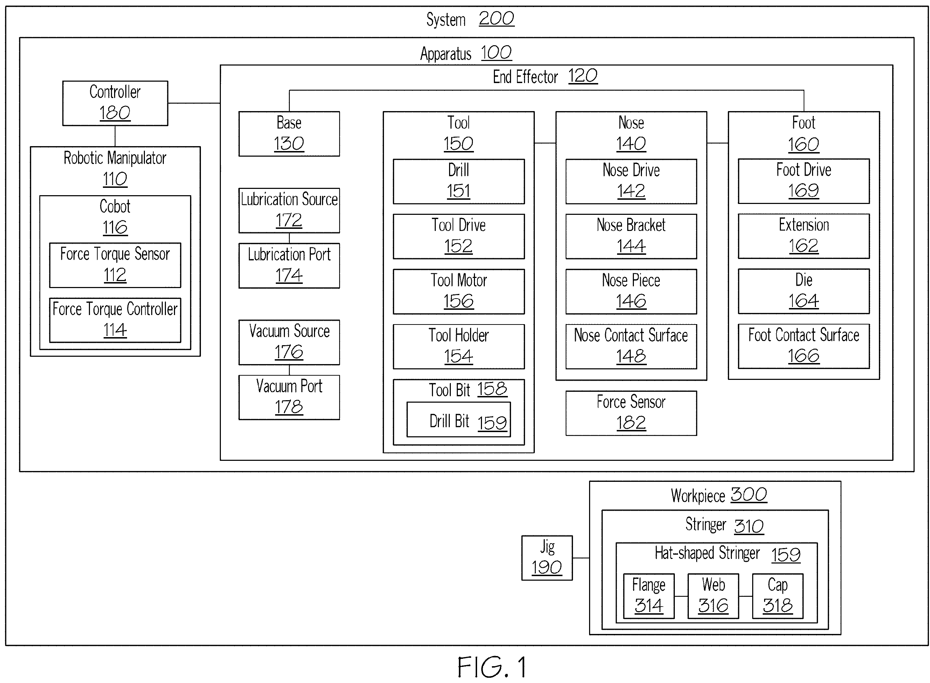

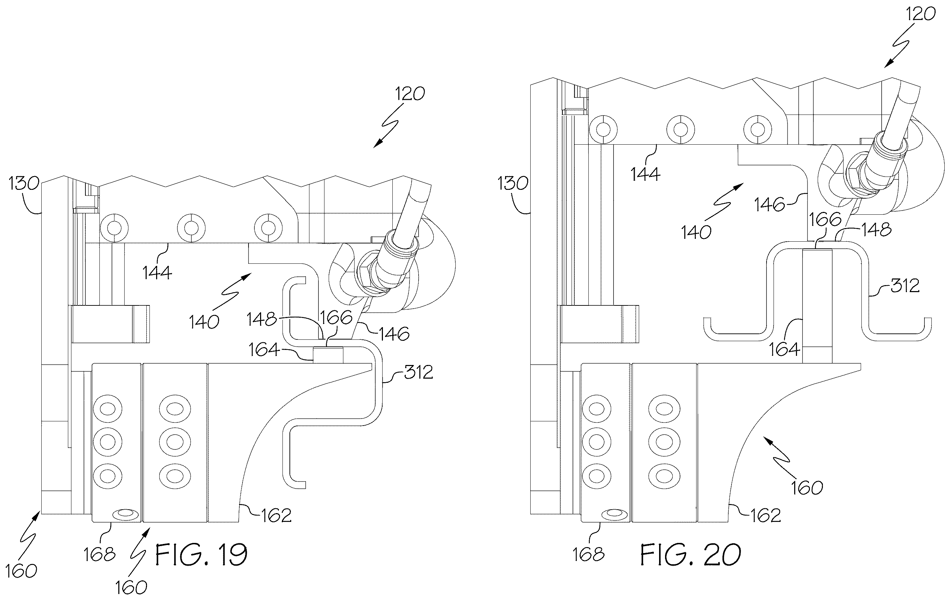

Referring now to Figs. 1 and 3-21 by way of examples, the present disclosure is directed to apparatus 100 for processing, such as drilling, workpiece 300. The following are examples of apparatus 100, according to the present disclosure. Examples of apparatus 100 include a number of elements, features, and components or combinations thereof. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

As best illustrated in Figs. 1, 3-5, 10-12 and 21, in one or more examples, apparatus 100 includes robotic manipulator 110 and end effector 120. End effector 120 is coupled to robotic manipulator 110. Robotic manipulator 110 and end effector 120 serve to automate the manipulation and processing of workpiece 300. The processing operation performed on workpiece 300 by apparatus 100 includes any suitable task, including, but not limited to, drilling, cutting, milling, grinding, welding, fastening, or material handling. Apparatus 100 provides mobility, precision, speed, and consistency during processing.

Robotic manipulator 110 includes any suitable programmable, automated arm designed to handle tasks like machining, assembly, or material handling. In various examples, robotic manipulator 110 includes a series of joints and links, driven by motors or actuators. End effector 120 is coupled to robotic manipulator 110 (e.g., an end of the robot's arm) and is configured to interact directly with workpiece 300. End effector 120 includes or otherwise manipulates tool 150.

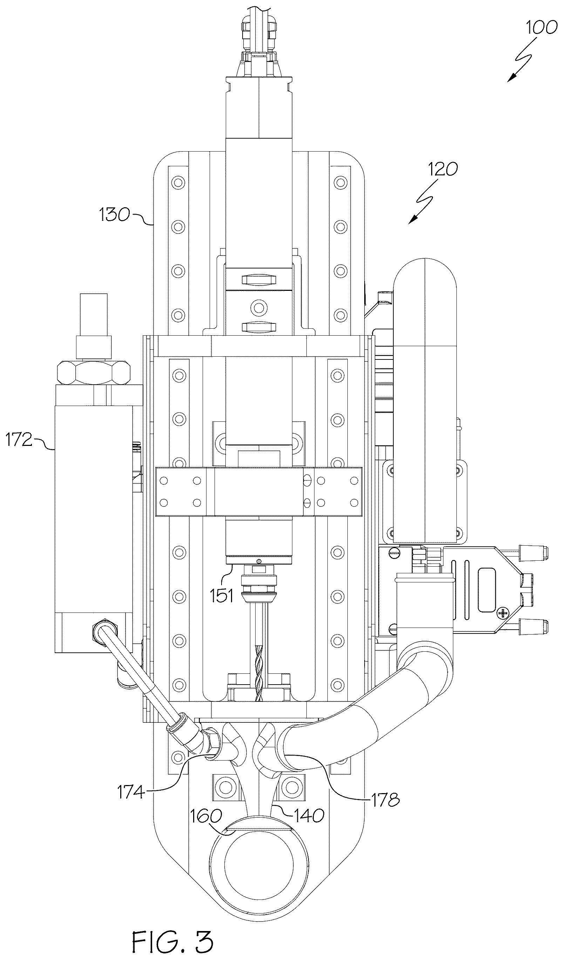

Tool 150 is configured to perform the processing or machining operation on workpiece 300. In one or more examples, tool 150 includes tool motor 156, tool holder 154, and tool bit 158. Tool holder 154 is coupled to tool motor 156 and is configured to hold tool bit 158. Tool holder 154 secures and enables interchanging of tool bit 158. Tool motor 156 rotates tool holder 154. Tool drive 152 is configured to move the tool motor 156 and, thus, move tool bit 158 relative to (e.g., along or at least partially through) workpiece 300. In one or more examples, tool 150 includes or takes the form of drilling tool. Throughout the present disclosure, tool 150 is described and illustrated by example as drill 151 and tool bit 158 is referred to as drill bit 159 (e.g., Figs 3-5 and 7). In these examples, tool drive 152 is configured to linearly move the tool motor 156 along the processing axis 102 to advance drill bit 159 through workpiece 300. However, in other examples, tool 150 includes or takes the form of a milling tool, a cutting tool, a grinding tool, a laser cutter, a welder, a riveting tool, or any other suitable machining tool.

Workpiece 300 includes any suitable object, article, part, component, or material that is processed or machined using apparatus 100. In one or more examples, workpiece 300 is elongated (e.g., over ten feet long) and thin (e.g., less than 0.028 inch thick). In one or more examples, workpiece 300 has a uniform thickness. In one or more examples, the thickness of workpiece 300 varies (e.g., increases and/or decreases) along its length (e.g., longitudinal axis). In one or more examples, workpiece 300 is substantially straight along its longitudinal axis. In one or more examples, workpiece 300 includes one or more bends, curves, contours, or jogs along its longitudinal axis. In one or more examples, workpiece 300 has a complex cross-sectional geometry, for example, viewed along its longitudinal axis.

Throughout the present disclosure, and as illustrated in Figs. 1, 6-10 and 13-21, workpiece 300 includes or takes the form of stringer 310. Generally, stringer 310 is a longitudinal structural component, typically a thin strip or beam, which runs along the length of a fuselage or wings of an aircraft. Its primary purpose is to provide structural support and stiffness to the aircraft's skin while keeping weight low. In one or more examples, stringer 310 includes or takes the form of a hat-shaped stringer (e.g., hat-shaped stringer 312). In one or more examples, hat-shaped stringer 312 includes, in cross-section, cap 318, webs 316, and flanges 314. Cap 318 (also referred to as a top or crown) is a flat or slightly curved (e.g., horizontal) section of the stringer. Webs 316 are two generally parallel (e.g., vertical) sides of the stringer that extend downward from opposing edges of cap 318 and provide height and resistance to bending. Flanges 314 are two (e.g., horizontal) extensions at the bottom of each web 316 that extend outward in opposite directions and serve as the attachment points to the aircraft skin. In other examples, stringer 310 includes or takes the form an L-shaped stringer (e.g., web and bottom flange), a T-shaped stringer (e.g., web and opposing bottom flanges), a Z-shaped stringer (top flange, web, and bottom flange), and the like.

The present disclosure further recognizes that stringers require many holes for attachment of the stringer to the aircraft's skin and/or for attachment of other components to the stringer. In a hat-shaped stringer, holes can be needed in the cap, the web, and/or the flange. However, some of these holes must be drilled after bends or joggles are formed in the stringer, which can make locating or indexing the drill difficult. Additionally, some holes must be drilled in one segment (e.g., the web) close to another segment (e.g., the flange), which can obstruct access to the drilling surface and can risk damaging the stringer during automated drilling. The apparatuses, systems, and methods disclosed herein provide advantageous solutions to the problems commonly associated with robotic drilling systems for long, thin workpieces, such as stringers.

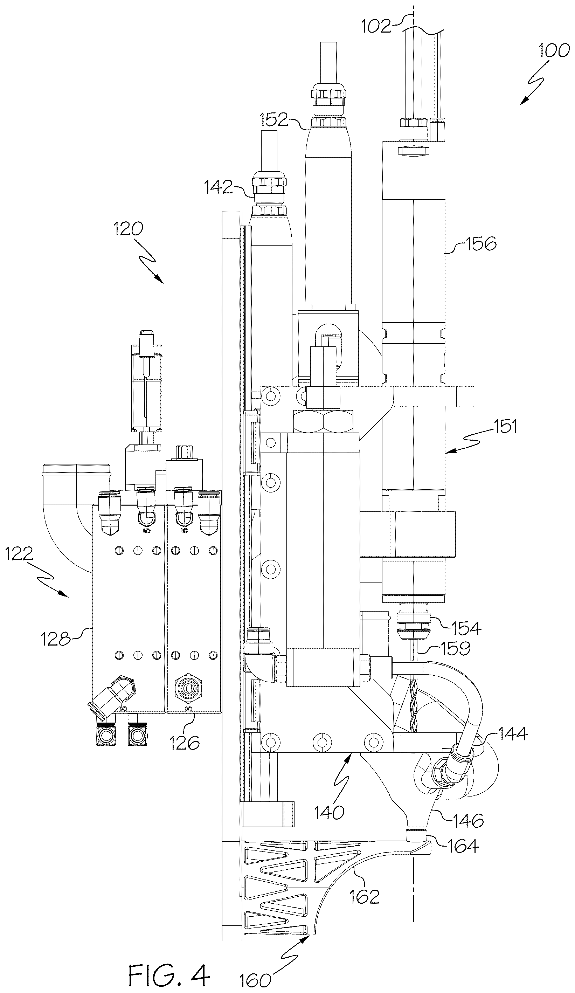

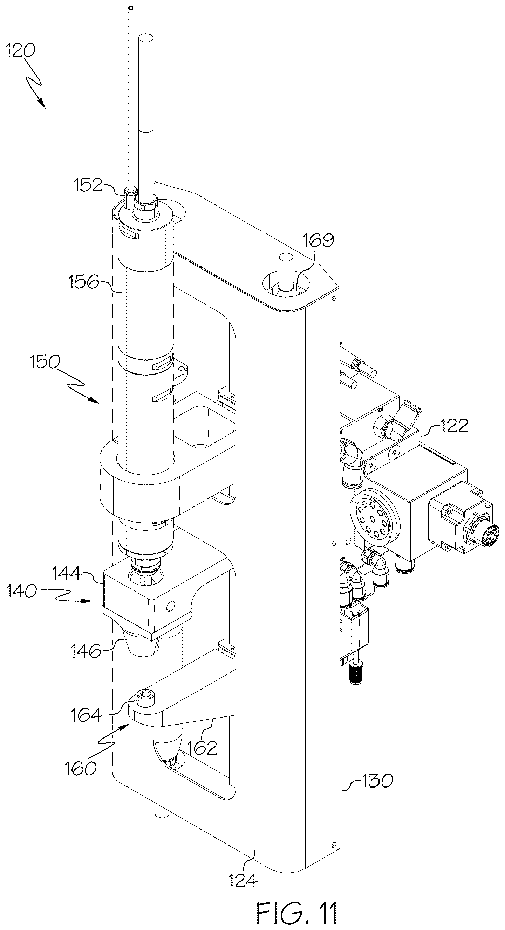

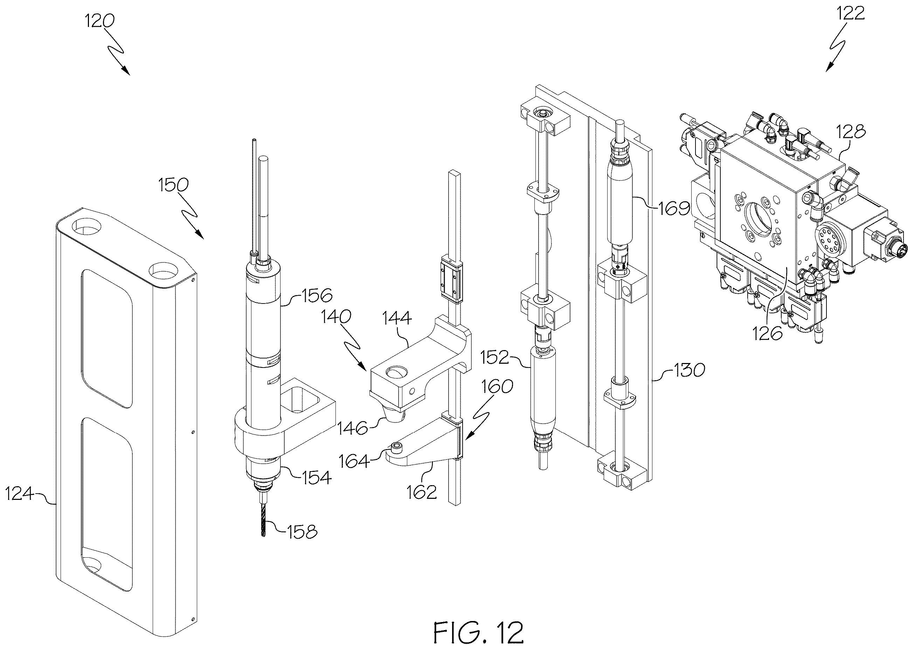

As best illustrated in Figs. 1, 3-5 and 10-12, in one or more examples, end effector 120 includes base 130, nose 140, tool 150, and foot 160. In the illustrated examples, tool 150 includes or takes the form of drill 151. Nose 140 is coupled to the base 130. In one or more examples, as illustrated in Figs. 3-5 and 10, nose 140 is movable relative to base 130 and foot 130 along (e.g., parallel to or coincident with) processing axis 102 (Fig. 4). In these examples, nose 140 is the movable, pressure-applying element (e.g., pressure nose) of a clamp mechanism formed by nose 140 and foot 160. In one or more examples, as illustrated in Figs. 11 and 12, nose 140 is fixed relative to base 130. Drill 151 is movable relative to nose 140, relative to base 130, and relative to foot 160 along processing axis 102. In various examples, drill 151 is coupled to base 130. In one or more examples, as illustrated in Figs. 3-5 and 10-12, drill 151 is coupled to nose 140, such as to nose bracket 144 (e.g., indirectly coupled to base 130). In one or more examples, drill 151 is coupled directly to base 130. Foot 160 is coupled to base 130. In one or more examples, as illustrated in Figs. 3-5 and 10, foot 160 is fixed relative to base 130. In one or more examples, as illustrated in Figs. 11 and 12, foot 160 is movable relative to base 130 along (e.g., parallel to or coincident with) processing axis 102. In these examples, foot 160 is the movable, pressure-applying element (e.g., pressure foot) of the clamp mechanism formed by nose 140 and foot 160. In one or more examples, robotic manipulator 110 positions (e.g., is configured to position) foot 160 in initial contact with workpiece 300. In one or more examples, robotic manipulator 110 positions (e.g., is configured to position) nose 140 in initial contact with workpiece 300. End effector 120 clamps (e.g., is configured to clamp) workpiece 300 between the nose 140 and the foot 160.

As best illustrated in Figs. 4, 5, 11 and 12, in one or more examples, apparatus 100 includes quick change assembly 122. Quick change assembly 122 is a modular device that enables robotic manipulator 110 to switch between different instances or types of end effector 120 without manual intervention or downtime. Generally, quick change assembly 122 includes a tool side adapter 126 (e.g., end effector adapter) that provides attachment of base 130, a robot side adapter 128 that provides attachment to the end of the robotic arm, and a locking mechanism. In one or more examples, quick change assembly 122 also includes utility connections for automatically connecting utilities to end effector 120 when coupled to robotic manipulator 110.

As best illustrated in Figs. 4, 5, 11 and 12, in one or more examples, base 130 serves as a support structure or strongback for foot 160 and nose 140. In one or more examples, base 130 is configured to be coupled to quick change assembly 122.

In one or more examples, nose 140 is coupled to, extends from, or otherwise forms a portion of base 130. In one or more examples, as best illustrated in Figs. 4, 5 and 10, apparatus 100 includes nose drive 142. Nose drive 142 is configured to move (e.g., translate) nose 140 along processing axis 102 relative to base 130. In one or more examples, nose drive 142 is coupled to or supported by base 130 and nose 140 (e.g., nose bracket 144) is coupled to and moved by nose drive 142. Nose drive 142 can be any suitable linear actuator, such as a ball screw assembly.

In one or more examples, foot 160 is coupled to, extends from, or otherwise forms a portion of base 130. In one or more examples, as best illustrated in Figs. 11 and 12, apparatus 100 includes foot drive 169. Foot drive 169 is configured to move (e.g., translate) foot 160 along processing axis 102. In one or more examples, foot drive 169 is coupled to or supported by base 130 and foot 160 (e.g., extension 162) is coupled to and moved by foot drive 169. Foot drive 169 can be any suitable linear actuator, such as a ball screw assembly.

In one or more examples, apparatus 100 includes tool drive 152. Tool drive 152 is configured to move (e.g., translate) drill 151 (e.g., or other tool 150) along processing axis 102. In one or more examples, as best illustrated in Figs. 4, 5 and 10, tool drive 152 is coupled to or supported by nose bracket 144 of nose 140 and drill 151 (e.g., tool 150) is coupled to and moved by tool drive 152. In one or more examples, as best illustrated in Figs. 11 and 12, tool drive 152 is coupled to or supported by base 130 and drill 151 (e.g., tool 150) is coupled to and moved by tool drive 152. Tool drive 152 can be any suitable linear actuator, such as a ball screw assembly.

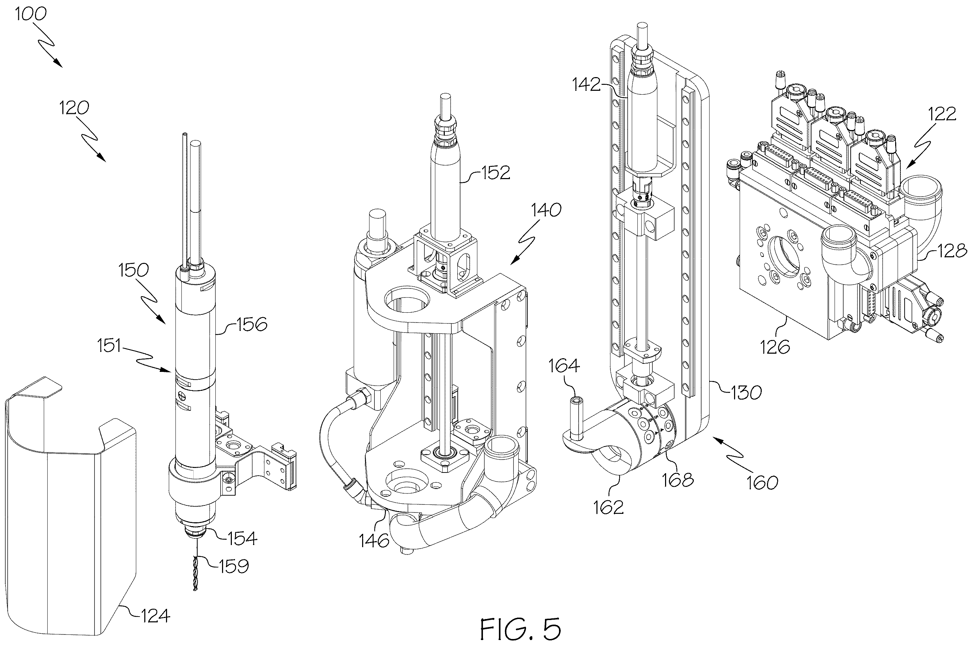

In various examples, end effector 120 includes other components associated with relative movement of nose 140, tool 150, and/or foot 160, such as bracketry, guide rails, bearings, and the like. In one or more examples, as illustrated in Figs. 5 and 12, end effector 120 includes cover plate 124. Cover plate 124 protects tool 150 and covers other functional components of end effector 120.

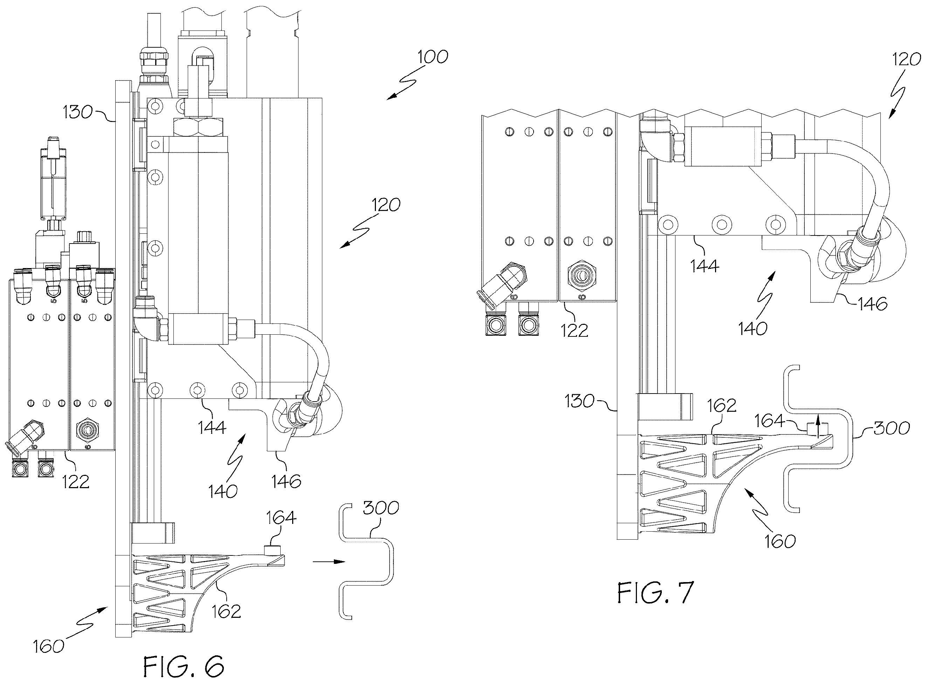

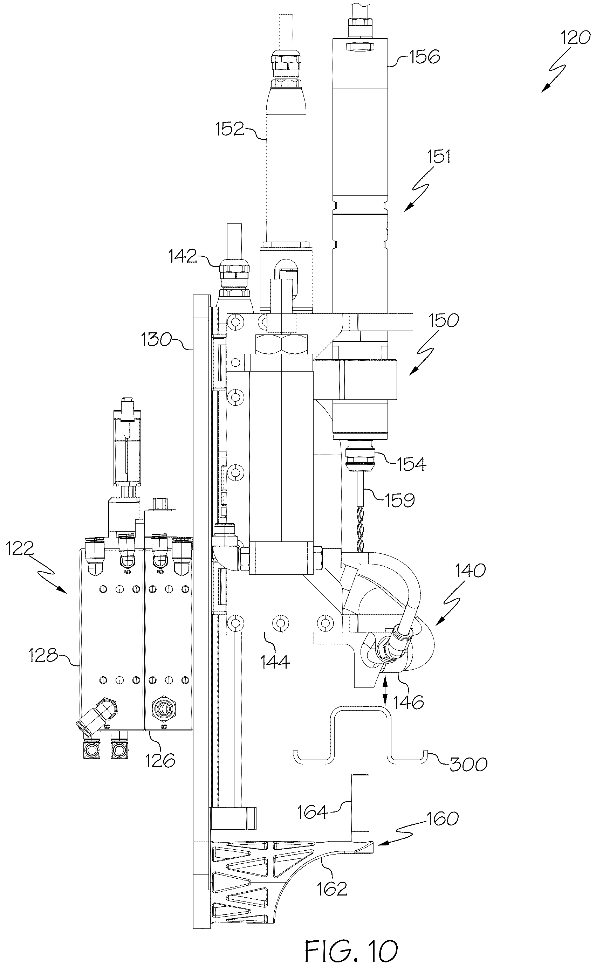

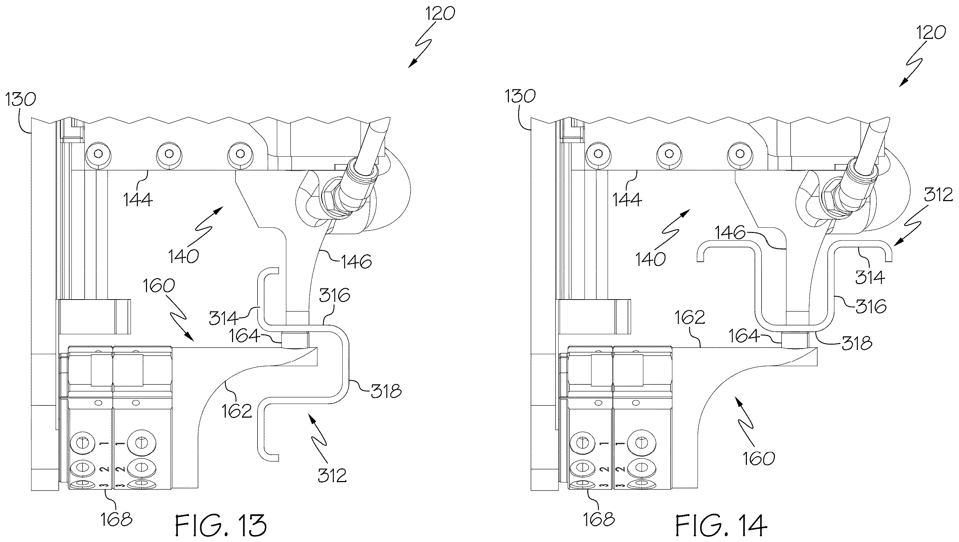

Figs. 6-10 illustrate examples of apparatus 100 at various stages of a processing operation, such as drilling. Figs. 13-19 illustrate examples of apparatus 100 with workpiece 300 clamped between variations of nose 140 and foot 160. In the various illustrated examples, workpiece 300 is depicted as hat-shaped stringer 312. In the examples illustrated in Figs. 6-9, 13, 16, 17 and 19 hat-shaped stringer 312 is oriented in a first or "side up" orientation such that a hole can be drilled in web 316 of hat-shaped stringer 312. In the examples illustrated in Figs. 10, 15, 18 and 20, hat-shaped stringer 312 is oriented in a second or "top up" orientation such that a hole can be drilled in cap 318 of hat-shaped stringer 312. In the example illustrated in Fig. 14, hat-shaped stringer 312 is oriented in a third or "bottom up" orientation such that a hole can be drilled in cap 318 of hat-shaped stringer 312.

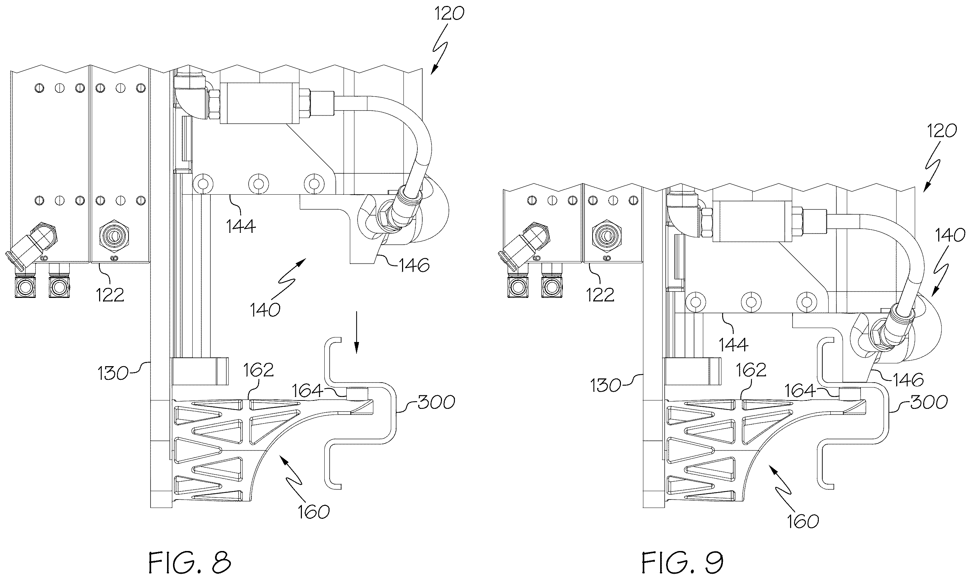

As illustrated in Figs. 6 and 10, robotic manipulator 110 approaches workpiece 300 and positions end effector 120 relative to workpiece 300. As illustrated in Fig. 7, force control is initialized and implemented by force torque sensor 112 and force torque controller 114. In one or more examples, force torque controller 114 instructs robotic manipulator 110 to move end effector 120 until foot contact surface 166 of foot 160 is positioned into contact with workpiece 300 (e.g., when foot 160 is fixed and nose 140 is movable). In one or more examples, force torque controller 114 instructs robotic manipulator 110 to move end effector 120 until nose contact surface 148 of nose 140 is positioned into initial contact with workpiece 300 (e.g., when nose 140 is fixed and foot 160 is movable. For example, force torque controller 114 searches for and determines contact in response force torque sensor 112 detecting a downward force at a predetermined threshold applied to foot 160 or nose 140. As illustrated in Fig. 8, after contact between one of foot 160 or nose 140 and workpiece 300 is confirmed, force torque controller 114 instructs robotic manipulator 110 to hold end effector 120 in position relative to workpiece 300 and controller 180 of end effector 120 initiates clamp up of workpiece 300. As an example, controller 180 instructs end effector 120 to move nose 140 into engagement with a work surface of workpiece 300 opposite foot 160 to clamp workpiece 300 between nose 140 and foot 160. As another example, controller 180 instructs end effector 120 to move foot 160 into engagement with a work surface of workpiece 300 opposite nose 140 to clamp workpiece 300 between nose 140 and foot 160. In one or more examples, relative movement of nose 140 or foot 160 is pre-set or otherwise limited based on a known thickness of the portion of workpiece 300 clamped between nose 140 and foot 160. In other examples, end effector 120 includes force sensor 182 that detects a force applied to nose 140 or foot 160 by workpiece 300 during clamping and controller 180 instructs end effector 120 to stop movement of nose 140 or foot 160 when the detected force reaches a predetermined threshold. As illustrated in Fig. 9, with workpiece 300 clamped between nose 140 and foot 160, controller 180 instructs end effector 120 to energize drill 151 and advance drill 151 along 102 into workpiece 300 for forming the hole. The rotational speed of drill 151 and a feed rate of drill 151 can also be controlled by controller 180 and can be based on the material composition of workpiece 300.

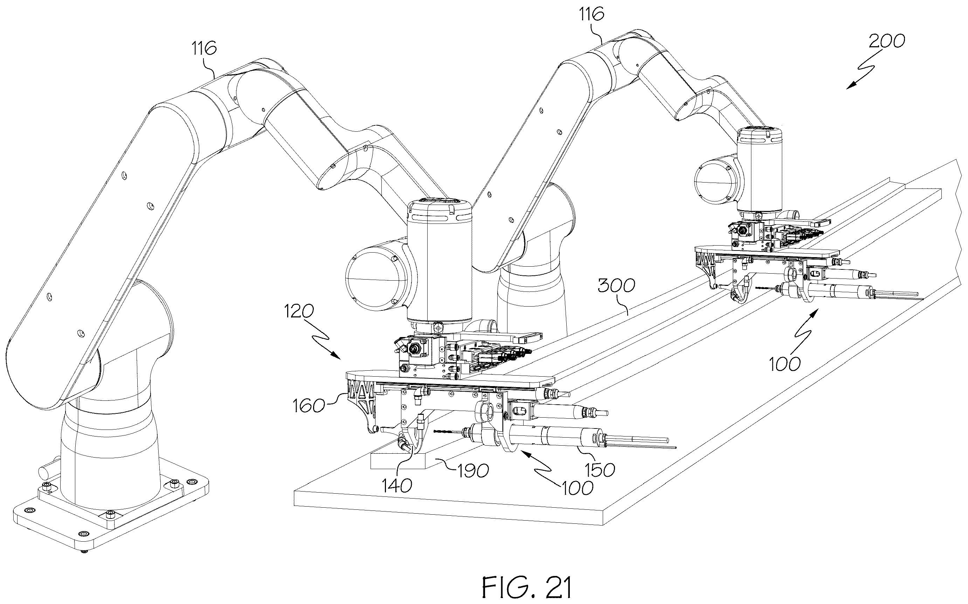

In various examples of apparatus 100, the components of end effector 120 enable automated robotic machining (e.g., drilling) of workpiece 300 without requiring large, heavy, and complex counterbalancing and clamping mechanisms typical of conventional robotic machining systems. In various examples, end effector 120 is configured for use with small, lightweight robots, such as collaborative robots, which are designed to work alongside humans. As illustrated in Figs. 1 and 21, in one or more examples, robotic manipulator 110 includes or takes the form of collaborative robot 116 (COBOT). In these examples, collaborative robot 116 has multiple degrees of freedom to enable repositioning of end effector 120 for drilling or processing at different angles and orientations relative to workpiece 300.

As illustrated in Fig. 1, in one or more examples, robotic manipulator 110 includes force torque sensor 112 (FT sensor). Force torque sensor 112 is configured to detect contact forces and/or torque between one of foot 160 or nose 140 (e.g., depending on whether nose 140 or foot 160 is movable or fixed relative to base 130) of end effector 120 and workpiece 300. In one or more examples, robotic manipulator 110 includes force torque controller 114. Force torque controller 114 is configured to adjust robotic manipulator 110 to control a contact force applied by foot 160 and/or nose 140 based on feedback from force torque sensor 112.

In one or more examples, force torque sensor 112 is integrated with robotic manipulator 110. In one or more examples, force torque sensor 112 is a built-in component of the collaborative robot 116. Force torque sensor 112 measures the forces and torques (twisting moments) applied to or by the robotic arm of robotic manipulator 110. In one or more examples, force torque sensor 112 provides real-time feedback to the control system of robotic manipulator 110, thereby enabling precise interaction with workpiece 300, force control, and adaptation to external conditions. In one or more examples, force torque sensor 112 includes one or more of a strain gauge that detects mechanical strain (e.g., deformation) caused by applied forces or torques, a load cell that serves as the structural base where forces and torques are applied, transferring deformation to the strain gauge, electronics or microcontroller that receive electrical signals from the strain gauge, convert them to digital data, and process them into usable force/torque values, and program instructions (e.g., software) that maps raw strain data to specific force and torque values across six degrees of freedom, accounting for sensor geometry and material properties.

During a machining operation (e.g., drilling) using apparatus 100, when end effector 120 interacts with workpiece 300 (e.g., pushing, twisting, clamping, etc.), forces and torques are transmitted through end effector 120 and to force torque sensor 112 of robotic manipulator 110. In one or more examples, force torque sensor 112 is integrated with the movement actuators of robotic manipulator 110 (e.g., drive motors). In these examples, force and torque are monitored using motor torque detection and monitoring. In one or more examples, an elastic element deforms slightly under the load. This deformation is proportional to the applied force or torque and varies across different axes depending on the direction and magnitude. The strain gauges attached to the elastic element detect the deformation and alter their resistance. In various examples, a plurality of strain gauges is positioned to capture forces (e.g., linear push/pull) and torques (e.g., rotational twist) in three spatial dimensions (X, Y, Z). The changing resistance generates small voltage signals, which are amplified and converted into digital data by the sensor's electronics. The processed signals are fed to a calibration matrix, which calculates the precise force and torque values along six axes (three forces: Fx, Fy, Fz; three torques: Tx, Ty, Tz). Force torque sensor 112 transmits this feedback data to force torque controller 114, which uses it to adjust the motion and force output of robotic manipulator 110 and, thus, the orientation and position of end effector 120.

In one or more examples, force torque controller 114 controls robotic manipulator 110 to limit the force or pressure applied to workpiece 300 during initial contact of foot 160 or nose 140, during subsequent contact (e.g., clamping) of nose 140 or foot 160, and during machining (e.g., advancing of drill 151). In one or more examples, force torque controller 114 stops movement of robotic manipulator 110 if unexpected resistance is detected by force torque sensor 112. In one or more examples, force torque controller 114 adjusts the force or pressure applied to workpiece 300 as needed throughout the machining (e.g., drilling) operation. As an example, during an automated machining operation, force torque sensor 112 can detect a (e.g., downward) force applied to foot 160 or a (e.g., upward) force applied to nose 140 by workpiece 300 to control initial contact. As another example, force torque sensor 112 can detect a (e.g., upward) force applied to nose 140, a (e.g., downward) force applied to foot 160, or a twisting torque to control clamp up of workpiece 300 between nose 140 and foot 160. As another example, force torque sensor 112 can detect an upward force and/or twisting torque during drilling to avoid damage to workpiece 300. In these examples, if the force or torque exceeds a predetermined threshold, force torque controller 114 slows or stops movement of robotic manipulator 110 to prevent damage to workpiece 300 and to prevent injury to a human operator.

As illustrated in Figs. 1, 3-5 and 10-12, in one or more examples, tool 150 is coupled to nose 140. In one or more examples, as illustrated in Figs. 3-5 and 10, tool 150 is drill 151. Drill 151 is coupled to nose 140 such that drill 151 moves along processing axis 102 with nose 140. In these examples, movement of nose 140 relative to workpiece 300 and initially positions drill 151 relative to workpiece 300, which advantageously reduces the stroke length required for machining.

As illustrated in Figs. 1 and 3-20, in one or more examples, nose 140 includes nose bracket 144 and nose piece 146. Nose bracket 144 is coupled to the base 130. Nose bracket 144 is movable relative to base 130 along processing axis 102. Nose piece 146 is coupled to or otherwise extends from nose bracket 144 along processing axis 102. Nose bracket 144 serves as a structural interface between base 130 and nose piece 146. Nose piece 146 provides a clamping body that replaces the pressure clamp foot of traditional end effectors. As illustrated in Figs. 1 and 4-20, nose piece 146 includes nose contact surface 148. Nose contact surface 148 is configured to contact workpiece 300 opposite foot 160 during clamp up. Nose piece 146 includes an aperture or other opening configured to receive and accommodate drill bit 159 (or other tool bit 158) during machining such that drill bit 159 has access to the work surface of workpiece 300.

As illustrated in Figs. 3-20, generally, nose piece 146 is shaped and has a geometry designed to interface with the geometry of workpiece 300 and properly position nose contact surface 148 during clamp up. In one or more examples, and best illustrated in Figs. 13-20, nose piece 146 is contoured, tapered, elongated, or otherwise shaped to accommodate or work around portions of workpiece 300 such that nose contact surface 148 can contact a desired work surface of workpiece 300 during clamp up, regardless of the cross-sectional geometry of workpiece 300 and/or the angular orientation of workpiece 300. The shape of nose piece 146 is configured to avoid obstructions, such as those formed by structural components of workpiece 300. This configuration enables nose piece 146 to engage and clamp workpiece 300 in various angular orientations or in confined areas. For example, nose piece 146 is shaped such that nose contact surface 148 projects and is spaced away from nose piece 146 along processing axis 102 for contact with a work surface of workpiece 300.

In an example, as illustrated in Figs. 14, 15, 18 and 20, the shape of nose piece 146 is configured to engage cap 318 of hat-shaped stringer 312 with nose contact surface 148, opposite foot 160. In these examples, nose piece 146 is shaped to accommodate hat-shaped stringer 312 in the top up or bottom up orientations for clamping cap 318 between nose 140 and foot 160 and drilling a hole through cap 318.

In another example, as illustrated in Figs. 13, 16, 17 and 19, the shape of nose piece 146 is configured to engage web 316 of hat-shaped stringer 312 with nose contact surface 148, opposite foot 160. In these examples, nose piece 146 includes contours, recesses, cutouts, and the like to accommodate hat-shaped stringer 312 in the side up orientation by avoiding flange 314 of hat-shaped stringer 312 and for clamping web 316 between nose 140 and foot 160 and drilling a hole through web 316.

As illustrated in Figs. 1 and 3-20, in one or more examples, foot 160 includes extension 162. In one or more examples, extension 162 extends from base 130, for example, approximately perpendicular to processing axis 102. In one or more examples, extension 162 is configured to initially contact workpiece 300, opposite nose 140. In one or more examples, foot contact surface 166 is formed by extension 162.

As illustrated in Figs. 1 and 3-20, in one or more examples, foot 160 includes die 164. In these examples, die 164 extends from extension 162, for example, along processing axis 102. In these examples, die 164 is configured to initially contact workpiece 300, opposite nose 140. In these examples, foot contact surface 166 is formed by die 164. In one or more examples, die 164 is hollow or is otherwise configured to receive a portion of drill bit 159 (or other tool bit 158) during machining such that drill bit 159 can penetrate through workpiece 300.

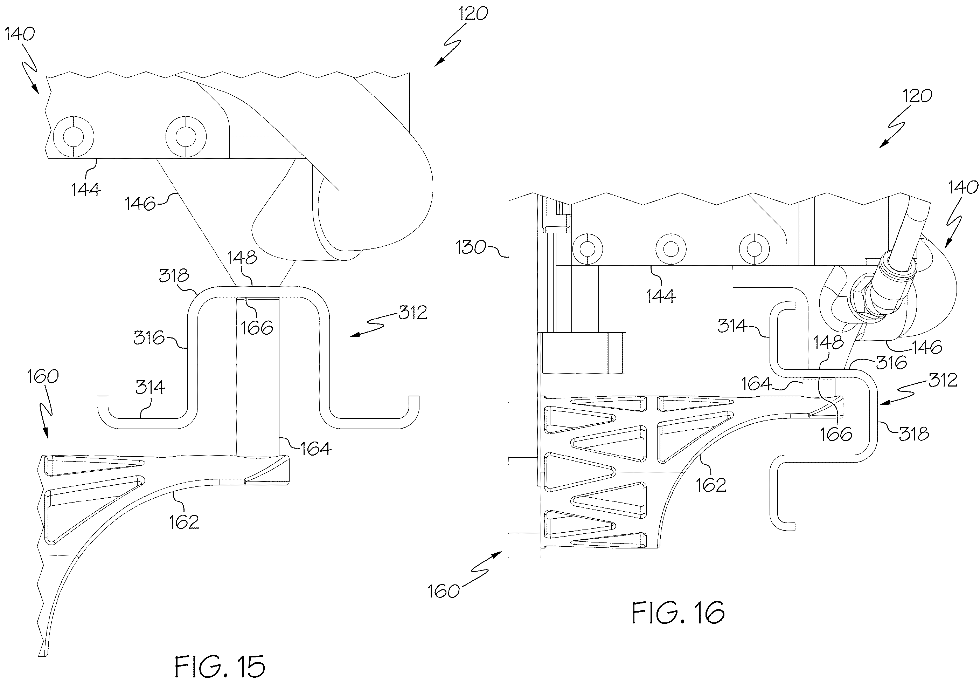

As best illustrated in Figs. 13-20, in one or more examples, different instances of die 164 have different geometries. The geometry (e.g., length) of die 164 is configured such that foot contact surface 166 projects and is spaced away from extension 162 along processing axis 102 for contact with a surface of workpiece 300, opposite nose piece 146. In one or more examples, as illustrated in Figs. 15-18, die 164 is removable from extension 162 or is otherwise interchangeable depending on the geometry of workpiece 300. In one or more examples, as illustrated in Figs. 13, 14, 19 and 20, extension 162 is removable from base 130 or is otherwise interchangeable depending on the geometry of workpiece 300. In these examples, each instance of extension 162 has an associated die 164 of a different length. In one or more examples, as illustrated in Figs. 15 and 16, foot 160 includes foot connector 168. Foot connector 168 is configured to enable quick and efficient disconnection and connection of different instances of extension 162 from base 130.

In one or more examples, as illustrated in Figs. 13, 16, 17 and 19, extension 162 and/or die 164 are configured to engage web 316 of hat-shaped stringer 312 with foot contact surface 166, opposite nose 140. In one or more examples, die 164 is shortened to accommodate hat-shaped stringer 312 in the side up orientation for clamping web 316 between die 164 and nose 140 and drilling web 316.

In one or more examples, as illustrated in Figs. 14, 15, 18 and 20, extension 162 and/or die 164 are configured to engage cap 318 of hat-shaped stringer 312 with foot contact surface 166, opposite nose 140. In one or more examples, die 164 is elongated to accommodate hat-shaped stringer 312 in the top up or bottom up orientation for clamping cap 318 between die 164 and nose 140 and drilling cap 318.

As illustrated in Fig. 1, in one or more examples, apparatus 100 includes controller 180. In these examples, controller 180 is configured to provide control instructions to operational components of end effector 120. In one or more examples, controller 180 provides control instructions to nose drive 142 for positioning nose 140 along processing axis 102. In one or more examples, controller 180 provides control instructions to tool drive 152 for advancing and withdrawing drill 151 along processing axis 102. In one or more examples, controller 180 provides control instructions to tool motor 156 for energizing drill 151. In one or more examples, controller 180 receives signals from force sensor 182 during clamping and/or drilling.

As illustrated in Figs. 1 and 3, in one or more examples, apparatus 100 includes lubricant source 172. In these examples, end effector 120 includes lubricant port 174. Lubricant port 174 is in fluid communication with lubricant source 172. As illustrated in Fig. 3, in one or more examples, lubricant source 172 includes a lubricant reservoir coupled to base 130 of end effector 120. Lubricant port 174 is formed through nose piece 146 of nose 140 such that lubricant can be applied to drill bit 159 (or other drill bit 159) during machining. As best illustrated in Fig. 3, in one or more examples, end effector 120 includes a lubricant tube that fluidly connects lubricant source 172 and lubricant port 174.

As illustrated in Figs. 1 and 3, in one or more examples, apparatus 100 includes vacuum source 176. In these examples, end effector 120 includes vacuum port 178. Vacuum port 178 is in fluid communication with vacuum source 176. As illustrated in Fig. 3, in one or more examples, vacuum source 176 includes a vacuum pump that is coupled to or remote from end effector 120. Vacuum port 178 is formed through nose piece 146 of nose 140 such that vacuum can be applied to drill bit 159 (or other drill bit 159) during machining. As best illustrated in Fig. 3, in one or more examples, end effector 120 includes a vacuum tube that fluidly connects vacuum source 176 and vacuum port 178.

Referring now to Figs. 1 and 3-21 by way of examples, the present disclosure is directed to system 200 for processing the workpiece 300, such as drilling workpiece 300. The following are examples of the system 200, according to the present disclosure. Examples of the system 200 include a number of elements, features, and components or combinations thereof. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

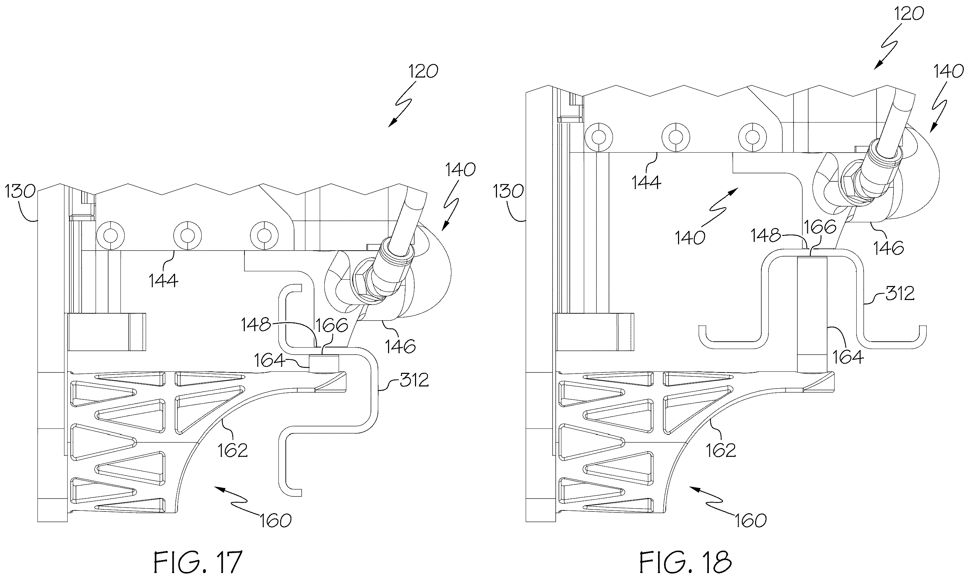

As illustrated in Figs. 1 and 17, in one or more examples, system 200 includes robotic manipulator 110 and end effector 120. End effector 120 is coupled to robotic manipulator 110. End effector 120 includes base 130, nose 140, tool 150, and foot 160. Nose 140 is coupled to the base 130. Tool 150 is movable relative to nose 140, base 130, and foot 160 along processing axis 102. In one or more examples, tool 150 is coupled to nose 140. In one or more examples, tool 150 is coupled to base 130. Foot 160 is coupled to base 130. One of nose 140 or foot 160 is movable relative to base 130 along processing axis 102 and another (e.g., opposing) one of nose 140 or foot 160 is fixed relative to base 130. In one or more examples, system 200 also includes jig 190. Jig 190 is configured to secure workpiece 300. Robotic manipulator 110 positions one of foot 160 or nose 140 in contact with workpiece 300. End effector 120 clamps workpiece 300 between nose 140 and foot 160. As illustrated in Figs. 1 and 3-21, in various examples, system 200 includes combinations of components as described herein with respect to apparatus 100, robotic manipulator 110, and end effector 120.

As illustrated in Figs. 1 and 17, in one or more examples of system 200, robotic manipulator 110 includes collaborative robot 116 having multiple degrees of freedom to enable repositioning of end effector 120 for processing at different angles and orientations relative to workpiece 300. Robotic manipulator 110 includes force torque sensor 112 configured to detect contact forces and torque between foot 160 and workpiece 300. Robotic manipulator 110 includes force torque controller 114 configured to adjust collaborative robot 116 to control contact force applied by foot 160 based on feedback from force torque sensor 112.

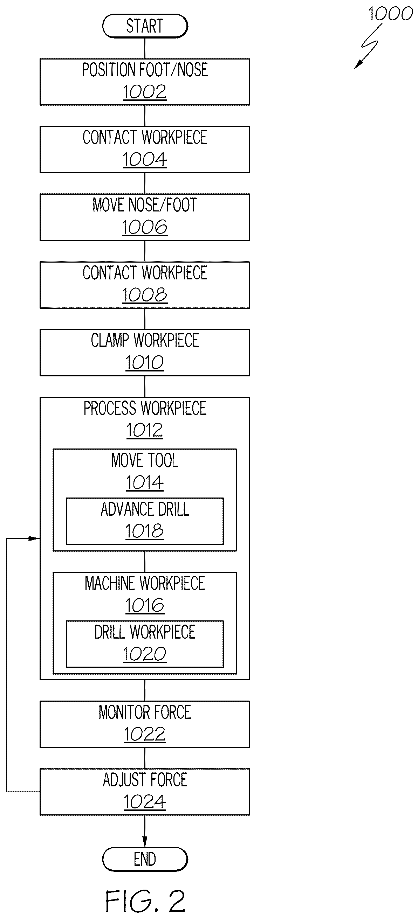

Referring now to Fig. 2, by way of examples, present disclosure is also directed to method 1000 for processing workpiece 300, such as drilling workpiece 300. The following are examples of method 1000, according to the present disclosure. In one or more examples, method 1000 is implemented using apparatus 100 (Figs. 1 and 3-21) or system 200 (e.g., Figs. 1 and 121). Examples of method 1000 include a number of elements, steps, operations, or processes or combinations thereof. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, at 1002, method 1000 includes a step of positioning one of foot 160 or nose 140 of end effector 120 relative to workpiece 300. In one or more examples, at 1004, foot 160 is positioned in contact with workpiece 300. In one or more examples, at 1004, nose 140 is positioned in contact with workpiece 300. One of foot 160 or nose 140 is positioned using robotic manipulator 110. In one or more examples, foot 160 is initially positioned in contact with workpiece 300 using force torque sensor 112 and under control of force torque controller 114. In one or more examples, nose 140 is initially positioned in contact with workpiece 300 using force torque sensor 112 and under control of force torque controller 114.

In one or more examples, method 1000 also includes a step of a re-positioning tool 150 (e.g., drill 151) in the X-Y plane to readjust the tool center point (TCP) to an appropriate position for machining (e.g., drilling) while maintaining the contact of foot 160 or nose 140 with workpiece 300 achieved at 1004. This readjustment facilitates hole accuracy and addresses possible minor variances in tool orientation due to force-controlled adjustments, which can affect TCP position and subsequent location of a hole drilled in workpiece 300. As an example, the TCP of tool 150 is commanded to a position defined by projecting a nominal hole position onto a plane defined by the drill normal vector, which is established from the force-controlled positioning step, at 1004.

In one or more examples, at 1006, method 1000 includes a step of moving one of nose 140 or foot 160. In one or more examples, at 1008, nose 140 is moved relative to workpiece 300 while foot 160 is held in contact with workpiece 300. In one or more examples, at 1008, foot 160 is moved relative to workpiece 300 while nose 140 is held in contact with workpiece 300. One of nose 140 or foot 160 is moved into contact workpiece 300 opposite the other one of foot 160 or nose 140. At 1010, workpiece 300 is clamped between nose 140 and foot 160. In one or more examples, a portion of workpiece 300 is accommodated by the shape of nose piece 146 of nose 140 such that nose contact surface 148 of nose piece 146 contacts workpiece 300 opposite foot 160.

In one or more examples, at 1012, method 1000 includes a step of processing workpiece 300. In one or more examples, at 1014 and 1016, processing workpiece 300 includes a step of moving tool 150 relative to workpiece 300 and a step of machining workpiece 300. As an example, at 1018 and 1020, processing workpiece 300 includes a step of advancing drill 151 and a step of drilling workpiece 300 (e.g., advancing drill bit 159 through workpiece 300).

In one or more examples, at 1022, method 1000 includes a step of monitoring a force applied to workpiece 300. In one or more examples, force and/or torque are detected and monitored using force torque sensor 112 and/or force sensor 182. At 1024, method 1000 includes a step of adjusting the force applied to workpiece 300. In these examples, the force applied to workpiece 300 by foot 160, nose 140, and/or tool 150 is adjusted based on a monitored force signal provided by force torque sensor 112 and as instructed by force torque controller 114 and/or controller 180. In other examples, the clamp up force required during machining (e.g., drilling) is fixed (e.g., two times drill thrust) and/or remains approximately constant throughout the machining operation.

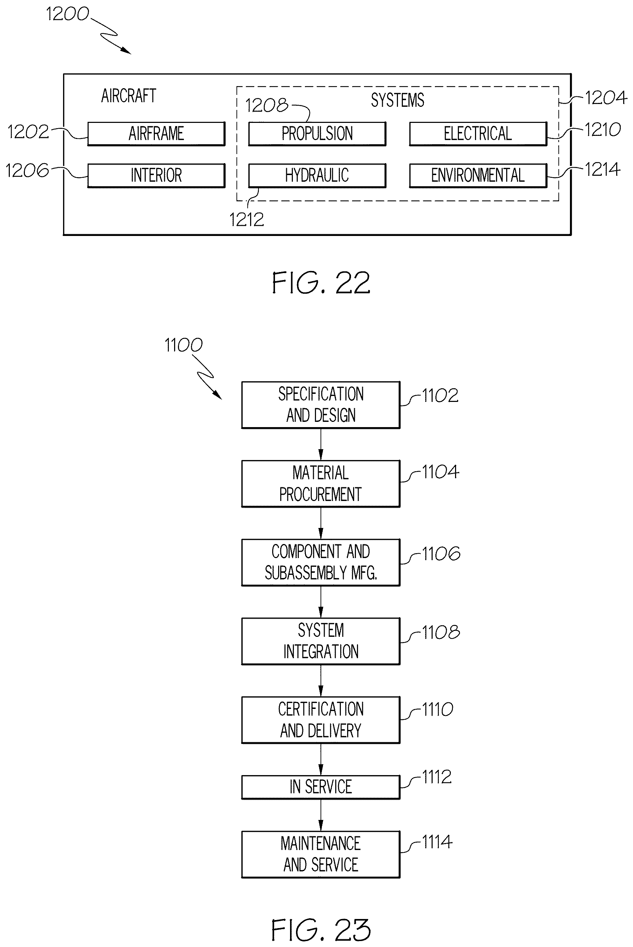

Referring now to Figs. 22 and 23 examples of apparatus 100, system 200, method 1000, described herein, may be related to, or used in the context of, aircraft 1200, as schematically illustrated in Fig. 22, and aerospace manufacturing and service method 1100, as shown in the flow diagram of Fig. 23. As an example, aircraft 1200 and/or manufacturing and service method 1100 may utilize components that have been processed (e.g., drilled) using apparatus 100 or system 200 and/or according to method 1000.

Referring to Fig. 22, which illustrates an example of aircraft 1200. Aircraft 1200 can be any aerospace vehicle or platform. In one or more examples, aircraft 1200 includes airframe 1202 having interior 1206. Aircraft 1200 includes a plurality of onboard systems 1204 (e.g., high-level systems). Examples of onboard systems 1204 of aircraft 1200 include propulsion systems 1208, hydraulic systems 1212, electrical systems 1210, and environmental systems 1214. In other examples, onboard systems 1204 also includes one or more control systems coupled to airframe 1202 of aircraft 1200. In yet other examples, onboard systems 1204 also include one or more other systems, such as, but not limited to, communications systems, avionics systems, software distribution systems, network communications systems, passenger information/entertainment systems, guidance systems, radar systems, weapons systems, and the like. Aircraft 1200 can include a number of components (e.g., workpiece 300), such as stringers, which are drilled or otherwise processed or machined using apparatus 100 or system 200 and/or according to method 1000.

Referring to Fig. 23, during pre-production of aircraft 1200, at 1102, the manufacturing and service method 1100 includes specification and design of aircraft 1200 and, at 1104, material procurement. During production of aircraft 1200, at 1106, component and subassembly manufacturing of aircraft takes place and, at 1108, system integration of aircraft 1200 takes place. Thereafter, at 1110, aircraft 1200 goes through certification and delivery and, at 1112, is placed in service. At 1114, routine maintenance and service of aircraft 1200 includes modification, reconfiguration, refurbishment, etc. of one or more systems of aircraft 1200.

Each of the processes of manufacturing and service method 1100 illustrated in Fig. 23 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of apparatus 100, system 200, and method 1000, shown and described herein, may be employed during any one or more of the stages of manufacturing and service method 1100 shown in the flow diagram illustrated by Fig. 23. In an example, components of aircraft 1200 can be drilled, processed, or machined using the apparatus 100 or system 200 and/or according to method 1000 during a portion of component and subassembly manufacturing (1106) and/or system integration (1108). Further, components of aircraft 1200 can be drilled, processed, or machined using the apparatus 100 or system 200 and/or according to method 1000 while aircraft 1200 is in service (1112). Also, components of aircraft 1200 can be drilled, processed, or machined using the apparatus 100 or system 200 and/or according to method 1000 during system integration (1108) and certification and delivery (1110). Similarly, components of aircraft 1200 can be drilled, processed, or machined using the apparatus 100 or system 200 and/or according to method 1000 while aircraft 1200 is in service (1112) and during maintenance and service (1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 3-22, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 3-22, referred to above, need to be included in every example and not all elements, features, and/orcomponents described herein are necessarily depicted in each illustrative example. Accordingly, some of the elements, features, and/or components described and illustrated in Figs. 1 and 3-22 may be combined in various ways without the need to include other features described and illustrated in Figs. 1 and 3-22, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1 and 3-22, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 3-22, and such elements, features, and/or components may not be discussed in detail herein with reference to each of Figs. 1 and 3-22. Similarly, all elements, features, and/or components may not be labeled in each of Figs. 1 and 3-22, but reference numerals associated therewith may be utilized herein for consistency.

In Figs. 2 and 23, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 23 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need to be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of apparatus 100, system 200, and method 1000 have been shown and described, modifications may occur to those skilled in the art upon reading the specification. The present application includes such modifications and is limited only by the scope of the claims.

Further, the present disclosure comprises examples according to the following clauses.
1. An apparatus for drilling a workpiece, the apparatus comprising:
   a robotic manipulator; and
   an end effector coupled to the robotic manipulator and comprising:
      a base;
      a nose coupled to the base;
      a drill coupled to the base and movable relative to the nose along a processing axis; and
      a foot coupled to the base,
   wherein:
      one of the nose or the foot is movable relative to the base along the processing axis and another one of the nose or the foot is fixed relative to the base;
      the robotic manipulator positions one of the nose or the foot in contact with the workpiece; and
      the end effector clamps the workpiece between the nose and the foot.
2. The apparatus of Clause 1, wherein the robotic manipulator comprises:
   a force torque sensor configured to detect contact forces and torque between the foot and the workpiece; and
   a force torque controller configured to adjust the robotic manipulator to control a contact force applied by the one of the nose or the foot based on feedback from the force torque sensor.
3. The apparatus of Clause 2, wherein the robotic manipulator comprises a collaborative robot having multiple degrees of freedom to enable repositioning of the end effector for drilling at different angles and orientations relative to the workpiece.
4. The apparatus of Clause 1, wherein the drill is coupled to the nose such that the drill moves along the processing axis with the nose.
5. The apparatus of Clause 1, wherein:
   the foot comprises:
      an extension coupled to the base; and
      a die extending from the extension along the processing axis; and
   the die is configured to contact the workpiece opposite the nose.
6. The apparatus of Clause 5, wherein the die is hollow to receive a drill bit.
7. The apparatus of Clause 1, wherein the nose comprises:
   a nose bracket coupled to the base; and
   a nose piece extending from the nose bracket along the processing axis and comprising a nose contact surface configured to contact the workpiece opposite the foot.
8. The apparatus of Clause 7, wherein the nose piece is contoured to accommodate a portion of the workpiece such that the nose contact surface contacts the workpiece.
9. The apparatus of Clause 1, further comprising one of:
   a nose drive configured to linearly move the nose along the processing axis; or
   a foot drive configured to linearly move the foot along the processing axis.
10. The apparatus of Clause 1, further comprising a tool drive configured to linearly move the drill along the processing axis.
11. The apparatus of Clause 1, further comprising a controller configured to:
   position one of the nose or the foot along the processing axis; and
   advance the drill along the processing axis.
12. The apparatus of Clause 1, further comprising a lubricant source,
   wherein the end effector further comprises a lubricant port in fluid communication with the lubricant source.
13. The apparatus of Clause 1, further comprising a vacuum source,
   wherein the end effector further comprises a vacuum port in fluid communication with the vacuum source.
14. A system for processing a workpiece, the system comprising:
   a robotic manipulator;
   an end effector coupled to the robotic manipulator and comprising:
      a base;
      a nose coupled to the base;
      a tool movable relative to the nose along a processing axis; and
      a foot coupled to the base; and
   a jig configured to secure the workpiece,
   wherein:
      one of the nose or the foot is movable relative to the base along the processing axis and another one of the nose or the foot is fixed relative to the base;
      the robotic manipulator positions one of the nose or the foot in contact with the workpiece; and
      the end effector clamps the workpiece between the nose and the foot.
15. The system of Clause 14, wherein the robotic manipulator comprises:
   a collaborative robot having multiple degrees of freedom to enable repositioning of the end effector for processing at different angles and orientations relative to the workpiece;
   a force torque sensor configured to detect contact forces and torque between the one of the nose or the foot and the workpiece; and
   a force torque controller configured to adjust the collaborative robot to control a contact force applied by the one of the nose or the foot based on feedback from the force torque sensor.
16. The system of Clause 15, wherein:
   the foot comprises:
      an extension coupled to the base and extending at least approximately perpendicular to the processing axis; and
      a die extending from the extension along the processing axis and configured to contact the workpiece;
   the nose comprises:
      a nose bracket coupled to the base and extending at least approximately perpendicular to the processing axis; and
      a nose piece extending from the nose bracket along the processing axis and comprising a nose contact surface configured to contact the workpiece opposite the die; and
   the tool comprises:
      a tool motor;
      a tool holder coupled to the tool motor and configured to hold a tool bit; and
      a tool drive configured to linearly move the tool motor along the processing axis to advance the tool bit through the workpiece.
17. The system of Clause 16, further comprising:
   one of:
      a nose drive configured to linearly move the nose along the processing axis; or
      a foot drive configured to linearly move the foot along the processing axis; and
   a controller configured to:
      position the one of the nose or the foot along the processing axis; and advance the tool along the processing axis.
18. A method for drilling a workpiece, the method comprising:
   positioning one of a nose or a foot of an end effector in contact with the workpiece using a robotic manipulator;
   moving another one of the nose or the foot to contact the workpiece opposite the one of the nose or the foot to clamp the workpiece between the nose and the foot; and
   advancing a drill bit of a drill of the end effector through the workpiece.
19. The method of Clause 18, further comprising:
   monitoring a force applied to the workpiece using a force torque sensor; and
   adjusting the force applied to the workpiece by the foot based on a monitored force signal provided by the force torque sensor.
20. The method of Clause 18, accommodating a portion of the workpiece with a nose piece of the nose such that a nose contact surface of the nose piece contacts the workpiece opposite the foot.

## Claims

1. An apparatus (100) for processing a workpiece (300), the apparatus (100) comprising:
a robotic manipulator (110); and
an end effector (120) coupled to the robotic manipulator (110) and comprising:
a base (130);
a nose (140) coupled to the base (130);
a tool (150) coupled to the base (130) and movable relative to the nose (140) along a processing axis (102); and
a foot (160) coupled to the base (130),
wherein:
one of the nose (140) or the foot (160) is movable relative to the base (130) along the processing axis (102) and another one of the nose (140) or the foot (160) is fixed relative to the base (130);
the robotic manipulator (110) is configured to position one of the nose (140) or the foot (160) in contact with the workpiece (300); and
the end effector (120) is configured to clamp the workpiece (300) between the nose (140) and the foot (160).

2. The apparatus (100) of Claim 1, wherein the robotic manipulator (110) comprises:
a force torque sensor (112) configured to detect contact forces and torque between the foot (160) and the workpiece (300); and
a force torque controller (114) configured to adjust the robotic manipulator (110) to control a contact force applied by the one of the nose (140) or the foot (160) based on feedback from the force torque sensor (112).

3. The apparatus (100) of any one of the preceding Claims, wherein the robotic manipulator (110) comprises a collaborative robot (116) having multiple degrees of freedom to enable repositioning of the end effector (120) for processing at different angles and orientations relative to the workpiece (300).

4. The apparatus (100) of any one of the preceding Claims, wherein the tool bit (158) is coupled to the nose (140) such that the tool (150) is configured to move along the processing axis (102) with the nose (140).

5. The apparatus (100) of any one of the preceding Claims, wherein:
the foot (160) comprises:
an extension (162) coupled to the base (130); and
a die (164) extending from the extension (162) along the processing axis (102); and
the die (164) is configured to contact the workpiece (300) opposite the nose (140).

6. The apparatus (100) of Claim 5, wherein the die (164) is hollow to receive a tool bit (158).

7. The apparatus (100) of any one of the preceding Claims, wherein the nose (140) comprises:
a nose bracket (144) coupled to the base (130); and
a nose piece (146) extending from the nose bracket (144) along the processing axis (102) and comprising a nose contact surface (148) configured to contact the workpiece (300) opposite the foot (160).

8. The apparatus (100) of Claim 7, wherein the nose piece (146) is contoured to accommodate a portion of the workpiece (300) such that the nose contact surface (148) contacts the workpiece (300).

9. The apparatus (100) of any one of the preceding Claims, further comprising one of:
a nose drive (142) configured to linearly move the nose (140) along the processing axis (102); or
a foot drive (169) configured to linearly move the foot (160) along the processing axis (102).

10. The apparatus (100) of any one of the preceding Claims, further comprising a tool drive (152) configured to linearly move the tool (150) along the processing axis (102).

11. The apparatus (100) of any one of the preceding Claims, further comprising a controller (180) configured to:
position one of the nose (140) or the foot (160) along the processing axis (102); and
advance the tool (150) along the processing axis (102).

12. The apparatus (100) of any one of the preceding Claims, further comprising:
- a lubricant source (172),
wherein the end effector (120) further comprises a lubricant port (174) in fluid communication with the lubricant source (172); and/or
- a vacuum source (176),
wherein the end effector (120) further comprises a vacuum port (178) in fluid communication with the vacuum source (176).

13. The apparatus (100) of any one of the preceding Claims, wherein the tool (150) is a drill (151).

14. The apparatus (100) of any one of the preceding Claims, further comprising a jig (190) configured to secure the workpiece (300).

15. A method (1000) for processing a workpiece (300), the method (1000) comprising:
positioning one of a nose (140) or a foot (160) of an end effector (120) in contact with the workpiece (300) using a robotic manipulator (110);
moving another one of the nose (140) or the foot (160) to contact the workpiece (300) opposite the one of the nose (140) or the foot (160) to clamp the workpiece (300) between the nose (140) and the foot (160); and
advancing a tool bit (159) of a tool (151) of the end effector (120) through the workpiece (300).
